# EUROPÄISCHE PATENTSCHRIFT

(11) **EP 3 177 839 B1**
(45) Veröffentlichungstag und Bekanntmachung des Hinweises auf die Patenterteilung: **29.08.2018**
(21) Anmeldenummer: 15741116.6
(22) Anmeldetag: 08.07.2015
(51) Int. Cl.: F16B 21/16

(54) **BOLZEN ZUM VERSPANNEN ANEINANDER LIEGENDER TEILE**
BOLT FOR BRACING PARTS LYING ON ONE ANOTHER
BOULON POUR SERRER DES PIÈCES PLACÉES L'UNE CONTRE L'AUTRE

(30) Priorität: 04.08.2014 DE 102014011309
(43) Veröffentlichungstag der Anmeldung: 14.06.2017
(73) Patentinhaber: Siegmund, Bernd, 86845 Grossaitingen (DE)
(72) Erfinder: Siegmund, Bernd, 86845 Grossaitingen (DE)
(74) Vertreter: Seifert, Thomas
(86) Internationale Anmeldenummer: PCT/EP2015/001385
(87) Internationale Veröffentlichungsnummer: WO 2016/020028

(56) Entgegenhaltungen:
- EP-A1- 2 333 356
- WO-A1-2008/149142

## Beschreibung

Die Erfindung bezieht sich auf einen Bolzen zum Verspannen aneinander liegender Teile, die Öffnungen aufweisen, umfassend einen Bolzenkörper, der von einer Seite der aneinander liegenden Teile in die Öffnungen einführbar ist, ein Betätigungsmittel, das von einem Ende des Bolzenkörpers aus betätigbar ist, sowie Spannmittel, die in dem Bolzenkörper gelagert und mit dem Betätigungsmittel teilweise aus dem Bolzenkörper heraus bewegbar sind.

Aus der EP 2 333 356 B1 ist ein Bolzen der eingangs genannten Art bekannt, mit dem sich zwei oder mehr aneinander liegende Teile beliebiger Art, die Öffnungen aufweisen, miteinander verspannen lassen. Derartige Bolzen umfassen einen Bolzenkörper, in den von der einen Stirnseite her eine Gewindespindel einschraubbar ist, die an diesem Ende über den Bolzenkörper übersteht und gleichzeitig als Handrad, meist mit vergrößerten Durchmesser gegenüber dem Bolzenkörper dient. An diesem Ende des Bolzenkörpers ist eine Schiebehülse vorgesehen, die unverdrehbar, jedoch in Längsrichtung verschiebbar angeordnet ist und den Bolzenkörper nach außen radial überragt. Am gegenüberliegenden Ende sind in dem Bolzenkörper radial nach außen durchgehende Öffnungen angeordnet, durch die als Spannelemente Kugeln so weit nach außen bewegbar sind, dass sie über den Außenumfang des Bolzenkörpers an dieser Stelle vorstehen. Das radiale nach außen Bewegen dieser Kugeln wird mit Hilfe der Gewindespindel erzielt, die im Bereich der Spannelemente eine konisch, kegelstumpfförmige, gegen das vom Handgriff abgewandte Ende sich verjüngende Fläche aufweist. Sobald diese kegelstumpfförmige Fläche mit den Kugeln in Kontakt gerät und die Gewindespindel weiter vorwärts geschraubt wird, drückt diese Kegelfläche die Kugeln nach außen, so dass sie über den Außenumfang des Bolzenkörpers vorstehen. Vor dem Verspannen befinden sich die Kugeln im zurückgezogenen Zustand innerhalb des Bolzenkörpers. Dadurch ist es möglich, den Bolzen mit dem die Kugeln aufweisenden Ende durch die fluchtenden Öffnungen der aneinander liegenden Teile hindurch zu schieben, bis sich die Kugeln vor der Außenfläche der Teile befinden. Nun wird die Gewindespindel mit Hilfe des Handgriffs vorwärts geschraubt, wodurch zunächst die Kugeln nach außen bewegt werden. Der Handgriff der Gewindespindel, welcher einen größeren Durchmesser als der Außendurchmesser des Bolzenkörpers besitzt, befindet sich noch in Abstand von der Schiebehülse. Durch weiteres Vorwärtsschrauben der Gewindespindel nähert sich die stirnseitige Anschlagfläche des Handgriffs immer mehr der Schiebehülse an und verpreßt diese letztendlich gegen die nach außen bewegten Kugeln am anderen Ende des Bolzens. Damit ist mit nur wenigen Handgriffen eine einfache, sehr hoch belastbare und spielfreie Verbindung zweier oder mehrerer aneinander liegender Teile möglich.

Aus der DE 199 17 209 C2 ist ein anderer Bolzen der eingangs genannten Art bekannt. Bei diesem Bolzen ist an dem Bolzenkörper ein durchmessergrößeres Abstützelement angeordnet, das entweder fest mit dem Bolzenkörper verbunden oder auf dem Bolzenkörper lageveränderbar ist, indem es mit einem Innengewinde in ein auf der Außenseite des Bolzenkörpers vorgesehenes Außengewinde eingreift. Das Verspannen der aneinander liegenden Teile erfolgt hier wiederum mittels Kugeln als Spannmittel zwischen den Kugeln und dem Abstützelement.

Aus der DE 202 19 317 U1 ist ein weiterer Bolzen der eingangs genannten Art bekannt. Auch dieser Bolzen weist ein gegenüber dem Bolzenkörper durchmessergrößeres Abstützelement auf. Das Betätigungsmittel, beispielsweise eine Gewindespindel, besitzt einen Handgriff, der topfartig und das Abstützelement übergreifend ausgebildet ist. Das Verspannen der aneinander liegenden Teile erfolgt hier wiederum mittels Kugeln als Spannmittel zwischen den Kugeln und dem Handgriff.

Beispielsweise finden derartige Bolzen zum Verspannen aneinander liegender Teile in Verbindung mit Schweißtischen Verwendung, mit denen sich Gegenstände aufspannen und verschweißen oder auf andere Weise bearbeiten lassen. Daneben gibt es jedoch auch eine Vielzahl anderer Einsatzmöglichkeiten für Schweißtische, beispielsweise zum Vermessen von Vorrichtungen oder dergleichen. Derartige Schweißtische sind etwa aus der EP 0 541 904 A1 oder der DE 91 09 540 U1 bekannt.

Schweißtische besitzen in ihrer Oberfläche und gegebenenfalls auch in seitlichen Wangen der Tischplatte eine Vielzahl von meist runden Öffnungen, die in einem gleichmäßigen Rastermaß angeordnet sind. Daneben besitzen die Schweißtische ein vielfältiges Zubehör, mit dem das Aufspannen von Gegenständen ermöglicht wird. So sind im wesentlichen winkelförmige Stützen vorgesehen, die ebenfalls runde Öffnungen oder aber auch langlochförmige Öffnungen aufweisen. Diese Stützen können untereinander oder mit dem Tisch durch Spannelemente, etwa Spannbolzen verbunden werden, die aus einer Gewindeschraube mit zugehöriger Mutter bestehen können. Daneben finden auch die eingangs erläuterten Bolzen Verwendung, die von einer Seite aus in die Öffnungen des Tisches eingeführt werden und sich innerhalb der Öffnung oder an der Unterseite der Tischplatte abstützen.

Daneben werden im Zusammenhang mit Schweißtischen als Spannelement Schraubzwingen verwendet, die ebenfalls zum Verspannen von Gegenständen dienen. Als weiteres Zubehör sind noch verschiedene Anschläge mit runden und/oder langlochförmigen Öffnungen und Prismen bekannt.

Die Öffnungen in den Schweißtischen und in deren Zubehör werden meist als runde Durchgangsbohrungen ausgeführt, die angephast sein können, d.h. eine kegelstumpfförmige Senkung aufweisen können.

Bei der Verwendung von Kugeln als Spannmittel in den Bolzen besteht jedoch der Nachteil, dass die Kugeln nur punkt- oder linienförmig im Bereich der Öffnung an dem einen der zu verspannenden Teile angreifen, so dass durch die Spannkräfte Materialverformungen auftreten können.

Derartige Materialverformungen können vermieden werden, wenn eine formschlüssige Verbindung zwischen den Spannmitteln der Bolzen und den aneinander liegenden Teilen besteht, die zu einer Verteilung der Spannkräfte führt. Bei der Verwendung von den zuvor erwähnten Gewindeschrauben mit zugehöriger Mutter als Spannelement liegen sowohl der Kopf der Gewindeschraube als auch die Mutter formschlüssig auf den zu verspannenden Teilen auf. Im Falle von angephasten Durchgangsbohrungen sind Verbindungsbolzen bekannt mit einem an dem Bolzenkörper angeordneten Senkkopf und einer Senkkopfschraube, die eine massive Verschraubung von zwei oder mehr aneinander liegenden Teilen möglich machen. Sowohl die Gewindeschraube mit zugehöriger Mutter als auch der Verbindungsbolzen können jedoch nicht von einer Seite aus bedient werden.

Die DE 10 2011 101 096 A1 beschreibt einen Bolzen der eingangs genannten Art, bei dem das Spannmittel als zumindest ein im Bolzenkörper verdrehsicher gelagertes Schiebeelement ausgebildet ist und der äußere Abschnitt des Schiebeelements eine Stützfläche in Form eines Mantelflächensegments eines Kegelstumpfes oder eine ringförmige Stützfläche aufweist. Hierdurch wird zwar eine formschlüssige Verbindung zwischen den Schiebeelementen und den zu verspannenden Teilen erreicht. Aufgrund von Reibungskräften können jedoch Probleme beim Lösen der Verbindung auftreten, d.h. es ist nicht sicher gewährleistet, dass sich die Schiebeelemente wieder in das Innere des Bolzenkörpers bewegen, um den Bolzen aus den Öffnungen herausziehen zu können.

Aus der WO 2008/149142 A1 ist ein Bolzen der eingangs genannten Art bekannt, der als Verriegelungsvorrichtung für Rollläden zum Einsatz kommt. Dazu wird die Verriegelungsvorrichtung in eine Öffnung in einer Wand eines Führungskanals für den Rollladen eingesetzt und an der Wand befestigt, um ein Hindernis zu schaffen zu der Bewegung des Rollladens. Für die Befestigung an der Wand werden Verriegelungsarme entgegen einer Rückstellkraft aus dem Körper des Bolzens herausgeschwenkt und gegen die Wand gedrückt. Dabei besteht der Nachteil, dass die Verriegelungsarme nur linienförmig im Bereich der Öffnung an der Wand angreifen, so dass durch die Spannkräfte Materialverformungen auftreten können.

Auf den Inhalt der zum Stand der Technik genannten Druckschriften wird Bezug genommen und dieser wird zum Gegenstand der vorliegenden Anmeldung gemacht.

Der vorliegenden Erfindung liegt das Problem zugrunde, einen von einer Seite aus bedienbaren Bolzen mit einem anderen Spannmittel anzugeben, bei dem Materialverformungen vermieden werden.

Gelöst wird diese Aufgabe mit den Merkmalen des Anspruchs 1. Vorteilhafte Ausgestaltungen der Erfindung ergeben sich aus den Unteransprüchen.

Bei einem Bolzen zum Verspannen aneinander liegender Teile, die Öffnungen aufweisen, umfassend einen Bolzenkörper, der von einer Seite der aneinander liegenden Teile in die Öffnungen einführbar ist, ein Betätigungsmittel, das von einem Ende des Bolzenkörpers aus betätigbar ist, sowie Spannmittel, die in dem Bolzenkörper gelagert und mit dem Betätigungsmittel teilweise aus dem Bolzenkörper heraus bewegbar sind, wird erfindungsgemäß vorgeschlagen, dass als Spannmittel wenigstens zwei, vorzugsweise vier Kippelemente vorgesehen sind, die entgegen einer Rückstellkraft aus dem Bolzenkörper heraus kippbar sind, die zur formschlüssigen Anlage an eines der aneinander liegenden Teile im heraus gekippten Zustand ausgebildet sind und deren Querschnitt in Längsrichtung des Bolzens ein Kreisringsektor ist. Durch die Ausgestaltung der Spannmittel als Kippelemente wird sichergestellt, dass keine unerwünschten Reibungskräfte entstehen, die ein Zurückkippen der Kippelemente in den Bolzenkörper beim Lösen der Verbindung behindern. Das Vorhandensein einer Rückstellkraft unterstützt dies noch vorteilhaft. Die Kippelemente können dabei lose in Aufnahmen des Bolzenkörpers gelagert sein und um eine Kante des Kippelements gekippt werden. Es wäre aber auch denkbar, die Kippelemente kippbar an Achsen in dem Bolzenkörper zu befestigen.

Die Öffnungen in den aneinander liegenden Teile können Durchgangsbohrungen sein, die gegebenenfalls eine Senkung aufweisen.

Der Bolzen kann eine Schiebehülse umfassen, die an einem Ende des Bolzenkörpers unverdrehbar, jedoch in Längsrichtung verschiebbar angeordnet ist und den Bolzenkörper nach außen überragt. Alternativ ist es auch möglich, dass der Bolzenkörper ein Abstützelement besitzt, das entweder fest oder über ein Außengewinde an dem Bolzenkörper verstellbar ist.

Das Betätigungsmittel kann eine Gewindespindel sein, die in ein Innengewinde des Bolzenkörpers eingreift und die gegebenenfalls mit einem Handgriff verbunden ist. Die Gewindespindel mit oder ohne Handgriff kann mit einem Innensechskant versehen sein. Der Handgriff kann topfartig und den Bolzenkörper übergreifend ausgebildet sein. Alternativ ist auch die Verwendung eines Schnellspannmechanismus denkbar.

Die Rückstellkraft kann auf einfache Weise von einem, die Kippelemente umgreifenden elastischen O-Ring gebildet sein. Es wäre auch denkbar, die Rückstellkraft durch Federn zu realisieren.

Wenn das Betätigungsmittel, beispielsweise die Gewindespindel, über Kugeln an den Kippelementen angreift, ergibt sich eine besonders leichtgängige Ausführung. Alternativ wäre es auch möglich, dass das Betätigungsmittel unmittelbar an den Kippelementen angreift, die dazu gegebenenfalls mit entsprechenden Anformungen ausgestaltet sein könnten.

Um insbesondere bei lose in dem Bolzenkörper gelagerten Kippelementen eine sichere Funktion des Bolzens zu gewährleisten, wird vorgeschlagen, dass der Bolzen eine Verdrehsicherung für die Kippelemente aufweist.

Bei einer Ausführungsform des Bolzens, bei der das Betätigungsmittel über Kugeln an den Kippelementen angreift, ergibt sich eine einfache Verdrehsicherung, wenn die Kippelemente jeweils eine Einkerbung aufweisen, in der die Kugel an dem Kippelement angreift.

Bei Ausführungsformen des Bolzens mit oder ohne Kugeln, über die das Betätigungsmittel an den Kippelementen angreift, können als Verdrehsicherung an dem Bolzenkörper zwischen den Kippelementen Führungsstifte oder Führungsstege vorgesehen sein.

Anhand der Zeichnung sind Ausführungsbeispiele der Erfindung näher erläutert. Es zeigen:
Figur 1 eine perspektivische Ansicht eines Bolzens,
Figur 2 eine Explosionsansicht des Bolzens der Figur 1,
Figur 3 eine Oberansicht des Bolzens der Figur 1,
Figur 4a einen Schnitt entlang der Linie IV-IV der Figur 3 im ungespannten Zustand des Bolzens,
Figur 4b einen Schnitt entlang der Linie IV-IV der Figur 3 im gespannten Zustand des Bolzens,
Figuren 5a, 5b und 5c verschiedene Ansichten eines Kippelements des Bolzens der Figur 1,
Figur 6 einen Schnitt entlang der Linie VI-VI der Figur 5a,
Figur 7 eine perspektivische Ansicht eines anderen Bolzens,
Figur 8 eine Explosionsansicht des Bolzens der Figur 7,
Figur 9 eine Oberansicht des Bolzens der Figur 7,
Figur 10a einen Schnitt entlang der Linie X-X der Figur 9 im ungespannten Zustand des Bolzens,
Figur 10b einen Schnitt entlang der Linie X-X der Figur 9 im gespannten Zustand des Bolzens,
Figur 11 einen Schnitt entlang der Linie XI-XI der Figur 9 im gespannten Zustand des Bolzens,
Figuren 12a, 12b und 12c verschiedene Ansichten eines Kippelements des Bolzens der Figur 7,
Figur 13 einen Schnitt entlang der Linie XIII-XIII der Figur 12a,
Figur 14 eine perspektivische Ansicht eines weiteren Bolzens,
Figur 15 eine Explosionsansicht des Bolzens der Figur 14,
Figur 16 eine Oberansicht des Bolzens der Figur 14,
Figur 17a einen Schnitt entlang der Linie XVII-XVII der Figur 16 im ungespannten Zustand des Bolzens,
Figur 17b einen Schnitt entlang der Linie XVII-XVII der Figur 16 im gespannten Zustand des Bolzens,
Figur 18 einen Schnitt entlang der Linie XVIII-XVIII der Figur 16 im gespannten Zustand des Bolzens,
Figuren 19a, 19b und 19c verschiedene Ansichten eines Kippelements des Bolzens der Figur 14 und
Figur 20 einen Schnitt entlang der Linie XX-XX der Figur 19a.

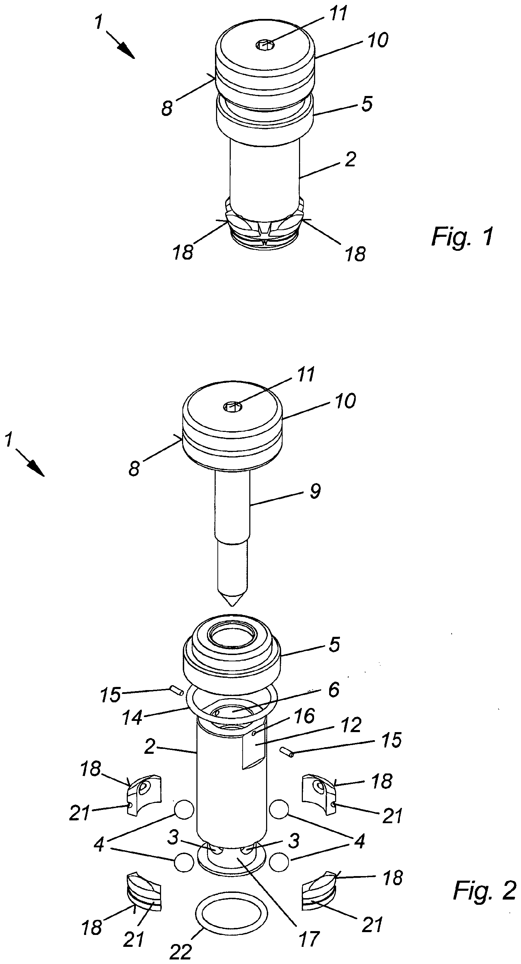

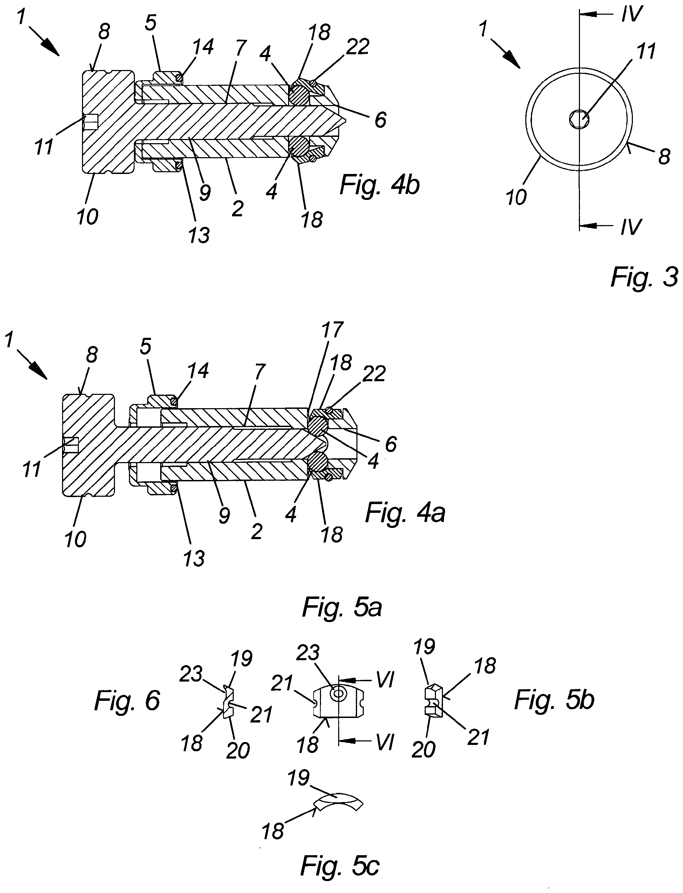

In den Figuren 1 bis 3 ist ein Bolzen 1 zum Verspannen aneinander liegender Teile, die Öffnungen aufweisen, dargestellt, der nach Art eines Feststellbolzens ausgebildet ist. Zur Erläuterung wird ergänzend auf die Figuren 4a, 4b, die Schnittdarstellungen des Bolzens 1 darstellen, und auf die Figuren 5a, 5b, 5c sowie 6, die ein Kippelement des Bolzens 1 darstellen, Bezug genommen.

Der Bolzen 1 umfasst einen Bolzenkörper 2, der in die Öffnungen von in der Zeichnung nicht dargestellten aneinander liegenden Teilen eingeführt werden kann. Die Öffnungen können als runde Durchgangsbohrungen ausgeführt sein, die angephast sein können, d.h. eine kegelstumpfförmige Senkung aufweisen können. Der Bolzenkörper 2 wird in einem Endbereich von Öffnungen 3 durchdrungen, in welchen Kugeln 4 radial hin und her bewegbar sind.

Am anderen Endbereich des Bolzenkörpers 2 ist eine Schiebehülse 5 unverdrehbar, jedoch in Längsrichtung des Bolzenkörpers 2 verschiebbar angeordnet und überragt den Bolzenkörper 2 nach außen radial.

Im Inneren des Bolzenkörpers 2 ist eine Bohrung 6 vorgesehen, die im oberen Bereich ein Innengewinde 7 aufweist. In die Bohrung 6 ist eine Gewindespindel 8, die ein entsprechendes Außengewinde 9 aufweist, als Betätigungsmittel gegenüber dem Bolzenkörper 2 verschraubbar. Die Gewindespindel 8 ragt dabei strinseitig über den Bolzenkörper 2 und die Schiebehülse 5 hinaus und ist dort zu einem Handgriff 10 verbreitert. Der Handgriff 10 ist drehfest, gegebenenfalls einstückig mit der Gewindespindel 8 verbunden und weist an seinem stirnseitigen Ende einen Innensechskant 11 zur Aufnahme eines entsprechenden Schlüssels mit Hebelarm auf.

Der Handgriff 10 und/oder die Schiebehülse 5 können zur Erhöhung der Griffigkeit gerändelt oder rutschfest beschichtet sein.

Die Schiebehülse 5 ist in Längsrichtung gegenüber dem Bolzenkörper 2 entlang von unrunden, vorzugsweise ebenen Schiebeflächen 12 axial verschiebbar, aufgrund der Unrundheit diese Schiebeflächen 12 jedoch drehfest mit dem Bolzenkörper 2 verbunden. Die Schiebehülse 5 besitzt dabei vorzugsweise den gleichen Außendurchmesser wie der Handgriff 10 und insbesondere einen größeren Außendurchmesser als der Durchmesser der Öffnungen in den aneinander liegenden Teilen, so dass die Schiebehülse 5 mit ihrem stirnseitigen Ende 13 an dem zu verspannenden Teil anliegt.

In dem stirnseitigen Ende 13 der Schiebehülse 5 ist eine Nut zur Aufnahme eines O-Rings 14 vorgesehen, der bewirkt, dass sich die Schiebehülse 5 und damit auch der Bolzenkörper 2 nicht ohne weiteres auf dem zu verspannenden Teil verdrehen kann.

Im Bereich der Schiebeflächen 12 sind Sicherungsstifte 15 durch Bohrungen 16 in dem Bolzenkörper 2 eingeführt. Die Sicherungsstifte 15 wirken mit in der Zeichnung nicht dargestellten, aber aus der EP 2 333 356 B1 hinlänglich bekannten Anschlägen zusammen, die an der Schiebehülse 5 angeordnet sind, und bilden so eine Sicherungseinrichtung, die die Schiebehülse 5 auf dem Bolzenkörper 2 sichert. Die Gewindespindel 8 sichert dabei die Lage der Sicherungsstifte 15 in den Bohrungen 16 des Bolzenkörpers 2. Die Schiebehülse 5 lässt sich damit auf dem Bolzenkörper 2 nur so weit verschieben, bis der Anschlag der Schiebehülse 5 an dem Sicherungsstift 15 ansteht, so dass die Schiebehülse 5 auch bei gelöster Gewindespindel 8 nicht ganz von dem Bolzenkörper 2 geschoben werden kann.

In dem Bolzenkörper 2 sind in einer Spannmittelaufnahme 17 in Form einer umlaufenden breiten Nut Kippelemente 18 gelagert, deren Ausgestaltung sich besonders deutlich aus den Figuren 5a, 5b, 5c sowie 6 ergibt. Anstelle der in dem Ausführungsbeispiel gezeigten vier Kippelementen 18 könnten auch wenigstens zwei Kippelemente 18 oder eine andere Anzahl vorgesehen sein. Die Kippelemente 18 befinden sich dabei radial nach außen jeweils vor den Kugeln 4.

In der Figur 5c ist zu erkennen, dass der Querschnitt der Kippelemente 18 in Längsrichtung des Bolzens 1 ein Kreisringsektor ist.

Der an dem zu verspannenden Teil zur Anlage kommende Bereich 19 der Kippelemente 18 ist zur formschlüssigen Anlage an eines der aneinander liegenden Teile in dem weiter unten näher erläuterten, heraus gekippten Zustand ausgebildet. Die genaue Ausgestaltung des Bereichs 19 kann dabei in Abhängigkeit von der Ausgestaltung der Öffnungen in den aneinander liegenden Teilen gewählt werden. Der dem Bereich 19 gegenüberliegende Bereich 20 der Kippelemente 18 ist für das Kippen im Querschnitt abgeschrägt ausgestaltet.

Die Kippelemente 18 besitzen eine Nut 21 zur Aufnahme eines die Kippelemente umgreifenden elastischen O-Rings 22. Der O-Ring 22 erzeugt eine Rückstellkraft auf die Kippelemente 18 in Richtung des Bolzenkörpers 2.

Um ein Verdrehen der Kippelemente 18 bei dem Kippvorgang zu verhindern, weisen die Kippelemente 18 eine Einkerbung 23 auf, in der die Kugeln 4 jeweils an den Kippelementen 18 angreifen, wie dies besonders deutlich in den Figuren 4a und 4b zu erkennen ist.

Beim Verspannen greift die Gewindespindel 8 mit ihrem, den Handgriff 10 gegenüberliegenden Ende an den Kugeln 4 an und verschiebt die Kugeln 4 radial nach außen, wozu das Ende der Gewindespindel konisch ausgebildet ist. Es versteht sich, dass auch eine andere Formgebung, beispielsweise gerundet, möglich wäre. Die Kugeln 4 greifen beim Verschieben jeweils an den Kippelementen 18 an und kippen die Kippelemente entgegen der Rückstellkraft des O-Rings 22 aus dem Bolzenkörper 2 heraus. Dies wird durch die, insbesondere in den Figuren 4a, 4b erkennbare Lage des Angriffspunkts der Kugeln 4 an den Kippelementen 18 und die Lage der Nuten 21 bzw. des O-Rings 22 gewährleistet.

Bei dem in der Figur 4a dargestellten ungespannten Zustand des Bolzens 1 befinden sich die Kugeln 4 und Kippelemente 18 im Inneren des Bolzenkörpers 2so dass der Bolzenkörper 2 durch die Öffnungen in zu verspannenden aneinander liegenden Teile hindurchgeführt werden kann, bis das Ende 13 der Schiebehülse 5 mit dem O-Ring 14 an einem der aneinander liegenden Teile anliegt.

Der Bolzen 1 wird gespannt, wie dies in der Figur 4b dargestellt ist, indem mit Hilfe des Handgriffs 10 die Gewindespindel 8 vorwärts, d.h. der Figur 4b nach rechts gegenüber dem Bolzenkörper 2 verschraubt wird. Dadurch kommt das dem Handgriff 10 gegenüberliegende Ende der Gewindespindel 8 in Kontakt mit den Kugeln 4 und drückt diese radial nach außen, wodurch die Kippelemente 18 aus dem Bolzenkörper 2 heraus kippen. Da die Kugeln 4 in der Einkerbung 23 an den Kippelementen 18 angreifen, ist ein Verdrehen der Kippelemente 18 beim Kippen ausgeschlossen. Beim weiteren Verschrauben der Gewindespindel 8 kommt schließlich der Handgriff 10 in Kontakt mit der Schiebehülse 5 und verschiebt diese auf dem Bolzenkörper 2 in Richtung der Kippelemente 18 bis die nicht dargestellten aneinander liegenden Teile zwischen den Kippelementen 18, d.h. zwischen dem an dem zu verspannenden Teil zur Anlage kommenden Bereich 19 der Kippelemente 18 und dem stirnseitigen Ende 13 der Schiebehülse 5 verspannt sind. Mit dem Bolzen 1 ist es also möglich, aneinander liegende Teile mit unterschiedlichen Gesamtdicken zu verspannen.

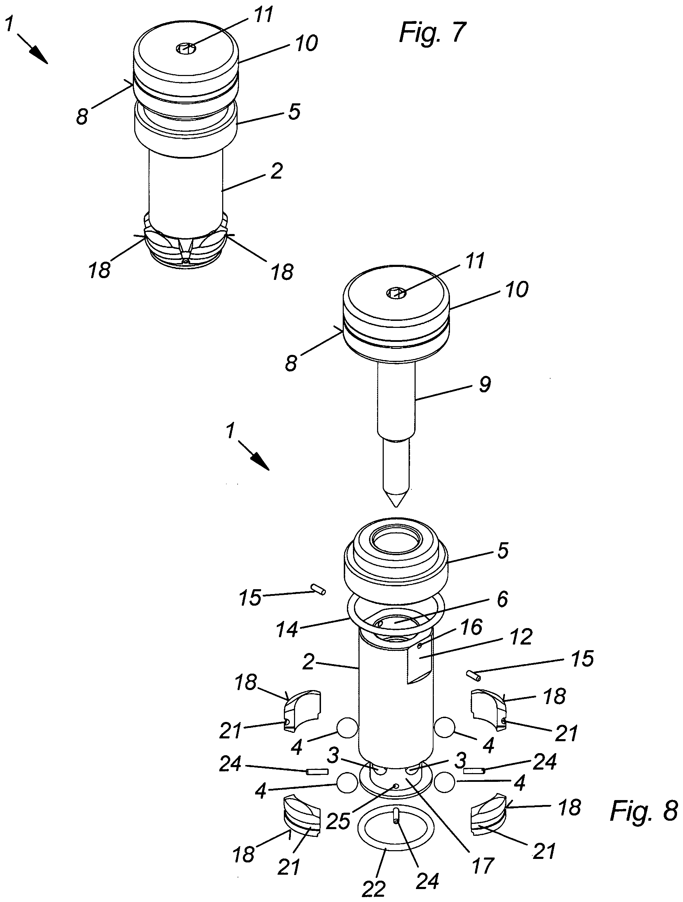

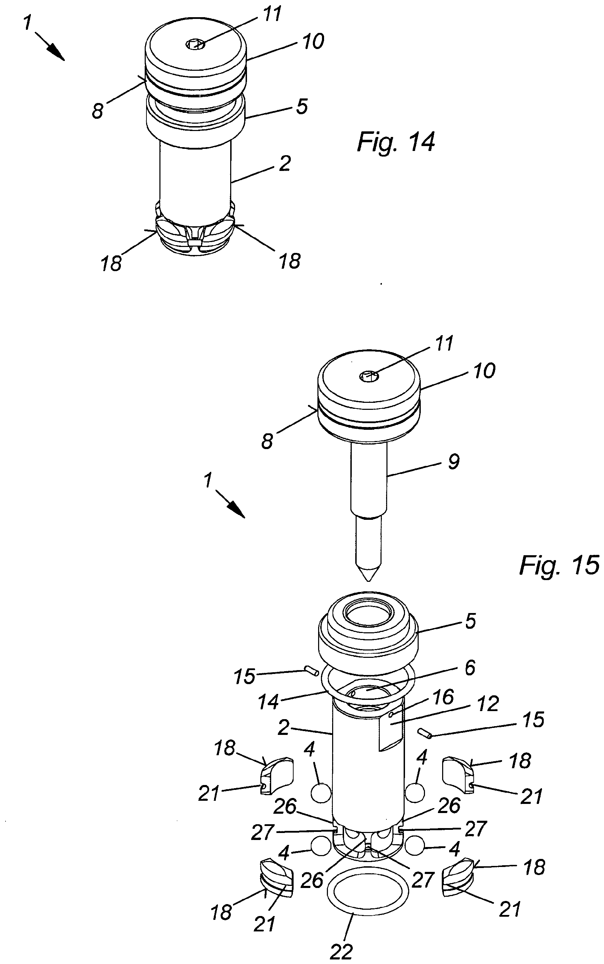

In den Figuren 7 bis 13 ist ein anderer Bolzen 1 und in den Figuren 14 bis 20 ein weiterer Bolzen 1 zum Verspannen aneinander liegender Teile dargestellt, der sich jeweils durch die Ausgestaltung der Verdrehsicherung für die Kippelemente 18 unterscheidet. Übereinstimmende Bestandteile des Bolzens 1 sind daher mit denselben Bezugszeichen versehen und zur Vermeidung von Wiederholungen wird auf die ausführliche Beschreibung des Bolzens 1 der Figuren 1 bis 6 Bezug genommen.

In dem Bolzenkörper 2 sind in einer Spannmittelaufnahme 17 in Form einer umlaufenden Nut Kippelemente 18 gelagert. Auch hier könnten anstelle der in den Ausführungsbeispielen der Figuren 7 bis 13 bzw. 14 bis 20 gezeigten vier Kippelemente 18 wenigstens zwei Kippelemente 18 oder eine andere Anzahl vorgesehen sein. Die Kippelemente 18 befinden sich radial nach außen vor den Kugeln 4 und besitzen keine Einkerbung 23.

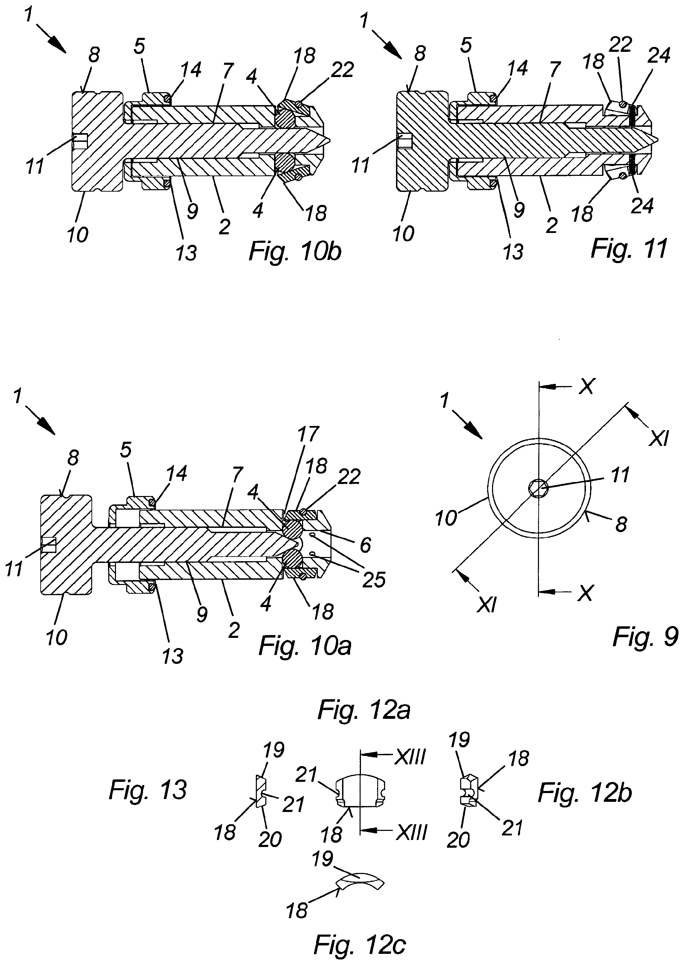

Zwischen den Kippelementen 18 befindet sich bei dem Bolzen 1 der Figuren 7 bis 13 jeweils ein Führungsstift 24, der in Öffnungen 25 in dem Bolzenkörper 2 gehalten ist, beispielsweise verschraubt, geklebt oder eingepresst. Die Lage der Führungsstifte 24 zwischen den Kippelementen 18 ergibt sich besonders deutlich beim Vergleich der Schnittdarstellungen der Figuren 10b und 11.

Bei dem Bolzen 1 der Figuren 14 bis 20 sind zwischen den Kippelementen 18 Führungsstege 26 vorgesehen, die die Spannmittelaufnahme 17 in jeweils einen Bereich für eines der Kippelemente 18 unterteilen. Es versteht sich, dass die Führungsstege ebenfalls eine Nut 27 für die Aufnahme des O-Rings 22 aufweisen.

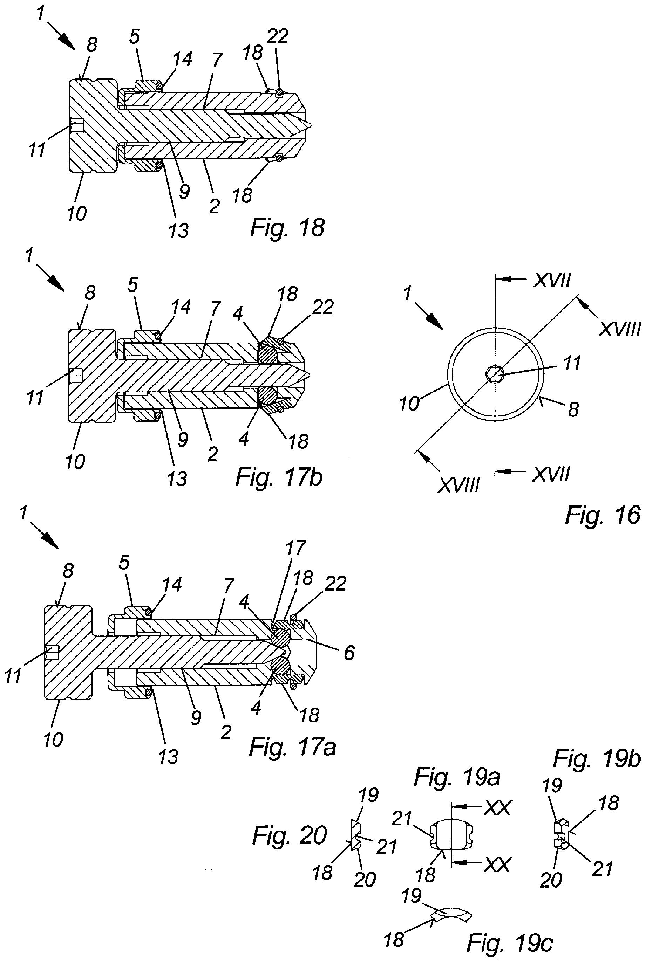

Der Winkelbereich des Kreisringsektors, der den Querschnitt der Kippelemente 18 bildet, ist bei den Ausführungsformen der Figuren 7 bis 13 bzw. 14 bis 20 kleiner, um zwischen den Kippelementen 18 Platz für die Führungsstifte 24 bzw. Führungsstege 26 zu lassen, wie dies insbesondere aus den Figuren 12c und 19c im Vergleich zur Figur 5c hervorgeht.

Durch die Führungsstifte 24 bzw. Führungsstege 26 wird sichergestellt, dass sich die Kippelemente 18 beim Kippen aus dem Bolzenkörper 2 heraus nicht verdrehen können.

Im Hinblick auf die in der Beschreibungseinleitung genannten weiteren Ausgestaltungsmöglichkeiten von Bolzen zum Verspannen aneinander liegender Teile, insbesondere wie in der DE 202 19 317 U1 und DE 199 17 209 C2 offenbart, wird darauf hingewiesen, dass die erfindungsgemäßen Kippelemente 18, die entgegen einer Rückstellkraft aus dem Bolzenkörper 2 heraus kippbar sind, auch bei Bolzen ohne Schiebehülse, aber mit Abstützelementen und/oder topfartig ausgebildeten Handgriffen oder mit Schnellspannmechanismus benutzt werden können.

### Bezugszeichenliste

- 1: Bolzen
- 2: Bolzenkörper
- 3: Öffnungen
- 4: Kugeln
- 5: Schiebehülse
- 6: Bohrung
- 7: Innengewinde
- 8: Gewindespindel
- 9: Außengewinde
- 10: Handgriff
- 11: Innensechskant
- 12: Schiebeflächen
- 13: Stirnseite
- 14: O-Ring
- 15: Sicherungsstifte
- 16: Bohrungen
- 17: Spannmittelaufnahme
- 18: Kippelemente
- 19: Bereich
- 20: Bereich
- 21: Nut
- 22: O-Ring
- 23: Einkerbung
- 24: Führungsstift
- 25: Öffnungen
- 26: Führungssteg
- 27: Nut

## Patentansprüche

1. Bolzen (1) zum Verspannen aneinander liegender Teile, die Öffnungen aufweisen, umfassend
einen Bolzenkörper (2), der von einer Seite der aneinander liegenden Teile in die Öffnungen einführbar ist,
ein Betätigungsmittel, das von einem Ende des Bolzenkörpers aus betätigbar ist, sowie
Spannmittel, die in dem Bolzenkörper (2) gelagert und mit dem Betätigungsmittel teilweise aus dem Bolzenkörper heraus bewegbar sind,
**dadurch gekennzeichnet, dass**
als Spannmittel wenigstens zwei, vorzugsweise vier Kippelemente (18) vorgesehen sind, die entgegen einer Rückstellkraft aus dem Bolzenkörper (2) heraus kippbar sind, die zur formschlüssigen Anlage an eines der aneinander liegenden Teile im heraus gekippten Zustand ausgebildet sind und deren Querschnitt in Längsrichtung des Bolzens (1) ein Kreisringsektor ist.

2. Bolzen (1) nach Anspruch 1, **dadurch gekennzeichnet, dass** die Rückstellkraft von einem, die Kippelemente (18) umgreifenden elastischen O-Ring (22) gebildet ist.

3. Bolzen (1) nach einem der vorhergehenden Ansprüche, **dadurch gekennzeichnet, dass** das Betätigungsmittel über Kugeln (4) an den Kippelementen angreift.

4. Bolzen (1) nach einem der vorhergehenden Ansprüche, **dadurch gekennzeichnet, dass** der Bolzen (1) eine Verdrehsicherung für die Kippelemente (18) aufweist.

5. Bolzen (1) nach den Ansprüchen 3 und 4, **dadurch gekennzeichnet, dass** als Verdrehsicherung die Kippelemente (18) jeweils eine Einkerbung (23) aufweisen, in der die Kugel (4) an dem Kippelement (18) angreift.

6. Bolzen (1) nach Anspruch 4, **dadurch gekennzeichnet, dass** als Verdrehsicherung an dem Bolzenkörper (2) zwischen den Kippelementen (18) Führungsstifte (24) oder Führungsstege (26) vorgesehen sind.

## Claims

1. Bolt (1) for clamping adjoining parts which have openings, comprising
a bolt body (2) which can be inserted into the openings from one side of the adjoining parts,
an actuator which can be actuated from one end of the bolt body, and
clamping means, which are mounted in the bolt body (2) and are partially movable out of the bolt body with the actuator,
**characterized in that**
as clamping means at least two, preferably four, tilting elements (18) are provided which are tiltable out of the bolt body (2) in opposition to a restoring force, which are designed for form-fitting contact on one of the adjoining parts in the tilted-out state, and which have a cross-section in the form of a circular ring sector in longitudinal direction of the bolt (1).

2. Bolt (1) according to claim 1, **characterized in that** the restoring force is formed by an elastic O-ring (22) which embraces the tilting elements (18).

3. Bolt (1) according to one of the preceding claims, **characterized in that** the actuator engages the tilting elements via balls (4).

4. Bolt (1) according to one of the preceding claims, **characterized in that** the bolt (1) has an anti-rotation mechanism for the tilting elements (18).

5. Bolt (1) according to claims 3 and 4, **characterized in that** the anti-rotation mechanism is realized by providing each of the tilting elements (18) with a notch (23) in which the ball (4) engages the tilting element (18).

6. Bolt (1) according to claim 4, **characterized in that** the anti-rotation mechanism is realized by providing guide pins (24) or guide ribs (26) between the tilting elements (18) on the bolt body (2).

## Revendications

1. Boulon (1) destiné à serrer des pièces placées l'une contre l'autre, qui présentent des ouvertures,
comportant
un corps de boulon (2), qui est apte à être inséré dans les ouvertures depuis un côté des pièces placées l'une contre l'autre,
un moyen d'actionnement, qui est apte à être actionné depuis une extrémité du corps de boulon, ainsi que
des moyens de serrage qui sont montés dans le corps de boulon (2) et aptes à être sortis partiellement du corps de boulon à l'aide du moyen d'actionnement,
**caractérisé par le fait que**
en tant que moyens de serrage, au moins deux, de préférence quatre, éléments basculants (18) sont prévus, qui sont aptes à basculer depuis le corps de boulon (2) en s'opposant à une force de rappel, qui sont configurés pour prenre appui par coopération de formes sur l'une des pièces placées l'une contre l'autre dans l'état sorti par basculement et dont la section transversale est un secteur en forme d'anneau circulaire dans une direction longitudinale du boulon (1).

2. Boulon (1) selon la revendication 1, **caractérisé par le fait que** la force de rappel est formée par un joint torique élastique (22) entourant les éléments basculants (18).

3. Boulon (1) selon l'une des revendications précédentes, **caractérisé par le fait que** le moyen d'actionnement vient en prise avec les éléments basculants par l'intermédiaire de billes (4).

4. Boulon (1) selon l'une des revendications précédentes, **caractérisé par le fait que** le boulon (1) présente un dispositif anti-rotation pour les éléments basculants (18).

5. Boulon (1) selon les revendications 3 et 4, **caractérisé par le fait qu'**en tant que dispositif anti-rotation les éléments basculants (18) présentent respectivement une encoche (23) dans laquelle la bille (4) vient en prise avec l'élément basculant (18).

6. Boulon (1) selon la revendication 4, **caractérisé par le fait qu'**en tant que dispositif anti-rotation, des broches de guidage (24) ou des nervures de guidage (26) sont prévues entre les éléments basculants (18) sur le corps de boulon (2).
